# EUROPÄISCHE PATENTSCHRIFT

(11) **EP 0 786 483 B1**
(45) Veröffentlichungstag und Bekanntmachung des Hinweises auf die Patenterteilung: **19.04.2000**
(21) Anmeldenummer: 97101004.6
(22) Anmeldetag: 23.01.1997
(51) Int. Cl.: C08G 69/18, C08G 69/20

(54) **Verfahren zur aktivierten anionischen Lactampolymerisation**
Process for an activated anionic lactam polymerisation
Procédé pour la polymérisation anionique activée de lactames

(30) Priorität: 25.01.1996 DE 19603302
(43) Veröffentlichungstag der Anmeldung: 30.07.1997
(73) Patentinhaber: EMS-INVENTA AG, 8002 Zürich (CH)
(72) Erfinder: Schmid, Eduard, Dr., 7402 Bonaduz (CH); Eder, Roman, 70794 Filderstadt (DE)
(74) Vertreter: Hotz, Klaus, Dipl.-El.-Ing./ETH

(56) Entgegenhaltungen:
- EP-A- 0 438 762
- DE-A- 1 495 132
- DE-A- 1 495 848
- DE-A- 1 520 605
- DE-A- 2 230 732
- US-A- 3 575 938

## Beschreibung

Die Erfindung betrifft ein Verfahren zur aktivierten anionischen Lactampolymerisation.

Polyamide werden gemäss dem relevanten Stand der Technik meist nach der Methode der sogenannten hydrolytischen Polymerisation aus Lactamen in der Schmelze bei Temperaturen von ca. 200 bis 320°C hergestellt, bei der zur Ringöffnung des Lactams oft eine Druckphase unter Wasserzusatz vorgeschaltet ist. Diese Reaktion verläuft langsam. Das Reaktionsprodukt, bevorzugt ein Granulat, wird in einem Nachfolgeschritt, z.B. im Spritzguss- oder Extrusionsverfahren, zu Gebrauchsgegenständen umgeformt.

Auch starke Basen, die z.B. zur Bildung von Metall-Lactamat führen, können die Umwandlung von Lactam zum Polyamid bewirken. Die entsprechende Polymerisationsreaktion verläuft langsam und wurde abgelöst durch die aktivierte anionische / alkalische Lactampolymerisation, bei der die Reaktion stark beschleunigt ist und die Polymerisationstemperatur unter den Polymerschmelzpunkt abgesenkt werden kann. Bei diesem Verfahren werden der Lactamschmelze Katalysator und Aktivator getrennt zugefügt.
Üblicherweise liegt dabei der Katalysator als Feststoff, z.B. als Alkali- oder als Erdalkali-Lactamat vor. Auch viele der aktivierenden sogenannten Cokatalysatoren wie z.B. Carbodiimide und verkappte Isocyanate, sind Feststoffe. Der Nachteil der freien Isocyanate, von denen viele flüssig sind, ist ihre hohe Toxizität.

Die anionische Lactampolymerisation und die aktivierte anionische Lactampolymerisation , sowie alle Aspekte der Polyamidsynthese und die entsprechenden Anwendungen sind z.B. beschrieben im Kunststoffhandbuch Band VI, Polyamide, C.Hanser Verlag, München.

Die aktivierte anionische Lactampolymerisation wird im allgemeinen zur Herstellung von sog. Gussteilen oder von grossvolumigem Halbzeug, wie Profilen, bevorzugt nach dem sogenannten 2-Topfverfahren durchgeführt.
Dabei werden je eine volumengleiche, den Katalysator bzw. den Cokatalysator enthaltende Lactamschmelze hergestellt, zusammengefügt und intensiv vermischt. Dadurch wird die Polymerisation gestartet und die Schmelze kann, unmittelbar danach, z.B. im sogenannten Monomerguss-Verfahren, zum Fertigteil verarbeitet werden.
Dazu muss möglichst darauf geachtet werden, dass
- die Lactamschmelzen wasser- und sauerstofffrei sind,
- die Misch- und Verarbeitungsschritte unter Inertgas erfolgen und
- die aktivierte Schmelze sehr rasch verarbeitet wird,
da sie nur eine beschränkte Verarbeitungszeit besitzt.

Um die rasche und homogene Verteilung des anionischen Katalysators, z.B. von Magnesium- oder Natrium-Lactamat, in der Lactamschmelze zu erleichtern, wurden sogenannte Flüssigkatalysatorsysteme entwickelt.

In der ***DE-A-22 30 732*** wird dabei auf die Schwierigkeiten eingegangen, welche die Zugabe von Katalysator in fester Form, z.B. von Metall-Lactamat, zur aktivatorhaltigen Lactam-schmelze verursacht. Sind Lösung und gleichmässiges Verteilen nicht gewährleistet, entsteht ein inhomogenes Polymer.

In der ***DE-A-14 95 132*** wird zur Problemlösung eine bei 90°C flüssige Lösung von Alkali-Lactamat in Lactam vorgeschlagen, die zusätzlich 0,3 bis 5,0 Gew.% eines schwerflüchtigen Amins enthält.

Eine Katalysatorlösung von Metall-Lactamat in einem N -disubstituierten Carbonsäureamid, insbesondere in N-Methylpyrrolidon, ist in der ***US-A-3,575,938*** beschrieben. Die verbesserte Zugabe und Verteilung dieser Katalysatorlösung in eine aktivierte Lactamschmelze erlaubt auch die Herstellung mineralgefüllter Produkte.

Nach der Lehre der ***DE 22 30 732*** muss die das Verfahren störende Krustenbildung, die Katalysatorlösungen aus Alkali-Lactamat in 2-Pyrrolidon rasch zeigen, durch Zugabe höherer Alkohole verhindert werden.

In der ***EP-A-0 438 762*** sind Katalysatorlösungen mit hoher Lagerstabilität auch bei tiefen Temperaturen beschrieben, die einen raschen Umsatz ermöglichen und zu Polyamid mit relativ niedrigem Restgehalt an Extrakt führen. Sie bestehen aus Lactam, 2-Pyrrolidon, speziellen Glykolen, Kohlenwasserstoffen und enthalten gegebenenfalls Amin.

Im zitierten Stand der Technik müssen jedoch zur Durchführung der aktivierten alkalischen Lactampolymerisation die Lösungen des Aktivators und des Katalysators separat verwendet werden.

Eine bevorzugte Vorgehensweise dabei ist, dass man zunächst eine homogene Lösung des Aktivators und gegebenenfalls weiterer Zusätze in einer wasserfreien Lactamschmelze herstellt und in einem weiteren Verfahrensschritt zur Auslösung der Polymerisationsreaktion den bevorzugt in Lactam gelösten Katalysator zufügt und in der Schmelze homogen verteilt.

Dabei werden an die Wasser- und Sauerstoff-Freiheit der Lösungen hohe Anforderungen gestellt: die Mischung im Reaktionsgefäss und die Verarbeitung müssen unter trockenem Inertgas erfolgen.

Da für hinreichend kurze Reaktionszeiten im Verfahren neben dem Katalysator auch Beschleuniger notwendig sind, muss nach genau festgelegten Vorgehensweisen verfahren werden.

So werden in den bekannten Verfahren im allgemeinen volumengleiche Schmelzen, die entweder Katalysator oder Aktivator gelöst enthalten, hergestellt, vor dem Verarbeitungsschritt vermischt und die Schmelze dadurch aktiviert, das heisst, der beschleunigte Polymerisationsschritt eingeleitet. Der Nachteil dieser Verfahren ist, dass zwei verschiedenen Schmelzen in zwei Gefässen aufbereitet werden müssen, wobei die katalysatorhaltige Schmelze auch in Abwesenheit des Aktivators nur eine beschränkte Verwendungszeit besitzt, denn nach dem Zusammengiessen bleibt nur noch eine beschränkte offene Zeit für die Verarbeitung, in der die Schmelze hinreichend niederviskos ist, so dass keine Zwischenlagerung der aktivierten Schmelze mehr möglich ist und die Formgebung, zum Beispiel im Giessprozess, rasch zu erfolgen hat.

In anderen Verfahren ist je ein Gefäss mit einer Katalysator oder Aktivator enthaltenden Schmelze zu leeren, diese in einem Mischschritt kontinuierlich zu vermischen und die so aktivierte Schmelze anschliessend direkt zu verarbeiten.
Auch hierbei bleibt die Problematik der eingeschränkten Lagerfähigkeit der Schmelzen unverändert bestehen.

In weiteren Verfahren nach dem Stand der Technik, z.B. nach **US-A-3,575,938** werden der Aktivator und wahlweise trockene Zusätze, wie z.B. Fasern, in die Laktamschmelze eingemischt und in einem Folgeschritt eine Katalysatorlösung zugefügt und durch intensives Mischen homogen verteilt. Diese Art des Zufügens und Verteilens wird erleichtert, wenn mit einer Katalysatorlösung gearbeitet werden kann. Das Verfahren bleibt aber weiterhin mehrstufig.

Die Aufgabe der vorliegenden Erfindung ist es, die Nachteile des Standes der Technik durch ein Verfahren unter Verwendung eines geeigneten Katalysator-System zu überwinden und die Lactampolymerisation dadurch zu vereinfachen.

Diese Aufgabe wird durch folgendes Verfahren zur aktivierten anionischen Laktampolymerisation: Verfahren zur aktivierten anionischen Laktampolymerisation, in dem in einer wasserfreien Laktamschmelze die Polymerisation ausgelöst und nachfolgend die Schmelze bei einer Verfahrenstemperatur bis 320 °C zumindest teilweise polymerisiert und gegebenenfalls nach Zugabe von Additiven der Formgebung zugeführt wird, und dabei die Polymerisation weitergeführt und/oder eine thermische Nachbehandlung durchgeführt wird, wobei eine kontinuierliche Verfahrensweise ausgenommen ist,
dadurch gekennzeichnet,
dass die Polymerisation durch Zugabe eines lagerstabilen, bei Raumtemperatur flüssigen Systems, welches Aktivator und Katalysator enthält, ausgelöst wird, wobei das Flüssigsystem erhältlich ist durch Umsetzung von
a) 20 bis 80 Gew.Teilen
   a1) mindestens einer N- disubstituierten Carbonsäureamid- Verbindung und/oder
   a2) mindestens einer N,N'- disubstituierten Harnstoff- Verbindung, welche beide auch einen durch ihre Substituenten gebildeten heterocyclischen Ring enthalten können,
b) 5 bis 30 Gew.Teilen mindestens eines Alkali- oder Erdalkali- Lactamats,
c) 5 bis 30 Gew.Teilen mindestens eines Aktivators,
wobei sich a), b) und c) zu 100 Gew.Teilen ergänzen.

Sie wird insbesondere gelöst, durch ein Verfahren, das unter Verwendung eines lagerstabilen, bei Raumtemperatur flüssigen Systems durchgeführt wird, welches zugleich Aktivator und Katalysator für die anionische Lactampolymerisation enthält, das die Verwendung getrennter Schmelzen mit Aktivator resp. Katalysator unnötig macht und dadurch der aktivierten anionischen Lactampolymerisation eine wesentliche Erweiterung der Anwendungen, der Rezepturen und der Verfahren sichert.

Besonders vorteilhaft ist dabei, dass neben dem Aktivator/Katalysator-Flüssigsystem nur das Lactam, beziehungsweise seine reine, lagerstabile Schmelze bereitgestellt werden muss, die unmittelbar vor der Formgebung durch die Zugabe nur des einen Flüssigsystems sowohl katalysiert, als auch aktiviert wird.
Dieses Flüssigsystem verteilt sich rasch und gleichmässig in der Lactamschmelze und löst die Polymerisation homogen und schnell aus.

Dies bedeutet insbesondere für Laurinlactam einen wesentlichen Vorteil, das wegen seines hohen Schmelzpunktes von knapp 160°C als Schmelze im Bereich von mindestens 160°C gelagert werden muss und bei Anwesenheit von Katalysator bei dieser Temperatur in seiner Lagerfähigkeit stark eingeschränkt ist.

Für das erfindungsgemässe Verfahren genügt somit ein einziger Vorratsbehälter für das geschmolzene reine Lactam, welches, frei von Katalysator oder Aktivator, unter Inertgas gut lagerfähig ist.

Das erfindungsgemässe Verfahren eignet sich durch die Verwendung des Flüssigsystems hervorragend für die Polymerisation und Verarbeitung von Lactamen, besonders von Caproactam und Önanthlactam und insbesondere von Laurinlactam und ihren Gemischen .
Die hohe Polymerisationsgeschwindigkeit erfordert verständlicherweise auch eine rasche Weiterverarbeitung der Schmelze durch Formgebungsprozesse.

Das im erfindungsgemässen Verfahren einer wasserfreien Lactamschmelze zuzusetzende Flüssigsystem besteht in wesentlichen aus
a) 20 bis 80 Gew.Teilen
a1) mindestens einer N-disubstituierten Carbonsäureamidverbindung und/oder
a2) mindestens einer N,N-disubstituierten Harnstoff-Verbindung,
   die beide auch einen durch ihre Substituenten gebildeten heterocyclischen Ring enthalten können, als Basiskomponente und Lösungsmittel,
b) 5 bis 30 Gew.Teilen mindestens eines Alkali- oder Erdalkali-Lactamats als Katalysator,
c) 5 bis 30 Gew.Teilen mindestens einer die anionische Lactampolymerisation aktivierenden Verbindung,
   wobei sich a), b) und c) zu 100 Teilen ergänzen
   und zusätzlich gegebenenfalls aus
d) verarbeitungs- oder anwendungsbedingten Additiven, die die Polymerisation nicht oder nicht wesentlich beeinträchtigen und mit den Komponenten a), b) und c) verträglich sind.

N,N'-disubstituierte Harnstoff-Verbindungen a2) sind beispielsweise in der BASF-Firmenschrift "BASF-Zwischenprodukte 1993" beschrieben.
N-substituierte Carbonsäureamid-Verbindungen a1) und Alkali- und Erdalkali-Lactamate b) sind in der ***US-A-3,575,938*** beschrieben.
Bevorzugte aktivierende Verbindungen c) sind verkappte, besonders mit Lactam verkappte Isocyanate, besonders Diphenylmethandiisocyanate, Hexamethylendiisocyanat, Toluoldiisocyanate, Isophorondiisocyanat, m- und p-Xylylendiisocyanat oder Phenylisocyanat, Mono-, oder Polycarbodiimide, wie z.B. N,N-Diisopropylcarbodiimid, N,N-Di-(o-tolyl)-carbodiimid, N,N-Dicyclohexylcarbodiimid, 2,2',6,6'-Tetraisopropyldiphenylcarbodiimid und Poly-(2,2-diisopropyl)-p-phenylencarbodiimid, sowie acylierte Lactame, darunter besonders acetyliertes Capro- und Laurinlactam sowie Oxazolin-Derivate, Oxazoline, Oxazolone, N-substituierte 2-Oxazolidone, Fettalkyl-oxazoline und mit Hydroxisäuren, wie Ricinolsäure hergestellte Bisoxazoline und ihre Umsetzungsprodukte mit Isocyanaten und Diisocyanaten.
Carbodiimide, acylierte Lactame, sowie Oxazolin-Verbindungen, wie Bisoxazolin mit Diisocyanaten als Brückenbildner, wie z.B. beschrieben in *Farben und Lacke, 1993 / 11, S. 911 - 915.*

Im erfindungsgemässen Verfahren wird dem Vorratsbehälter reines, wasserfreies Lactam als Schmelze entnommen und einer Mischvorrichtung zugeführt. Dort wird unter intensivem Durchmischen und gezielter Temperaturführung das flüssige System, bevorzugt in einem Anteil von 0,5 bis 15 Gew.%, zugefügt und die Schmelze homogenisiert. Danach wird die aktivierte Lactamschmelze sofort einem Verarbeitungs- respektive Formgebungsschritt unterworfen.

Durch Anheben der Verfahrenstemperatur, bevorzugt auf 200 bis 320°C, insbesondere auf 240 bis 290°C wird die Polymerisation so stark beschleunigt, dass sie innerhalb von 30 bis 200 Sekunden abläuft.

In einer bevorzugten Ausführungsvariante wird die aktivierte katalysatorhaltige Schmelze durch Anpassung der Anteilmenge des flüssigen Systems, und der Verfahrenstemperatur so weit polymerisiert, dass sie, gegebenenfalls unter Zwischenschalten von ergänzenden Verfahrensschritten, wie z.B. der Additivzugabe, direkt der Formgebung zugeführt wird und dort auspolymerisiert.
Der frisch aktivierten Schmelze, die zunächst noch hinreichend niederviskos und dünnflüssig ist, können problemlos verarbeitungs- und/oder verwendungsbedingte Additive zugesetzt werden. Diese Zusätze sind selbstverständlich auch in jedem anderen Schritt des Verfahrens möglich.
Im erfindungsgemässen Verfahren ist es infolge der kurzen Reaktionszeiten und der unmittelbar anschliessenden Formgebung in vorteilhafter Weise möglich, Additive zu verwenden, die leicht sedimentieren.
Dazu können in einer besonderen Ausführungsform, z.B. beim Einatz von schweren Füllstoffen, zusätzlich gut getrocknete, feindisperse Kieselsäure oder andere thixotropierend wirkende Zusätze zugefügt werden.

Als Additive d) werden bevorzugt eingesetzt:
aus dem Stand der Technik bekannte Verarbeitungshilfsmittel, Weichmacher, Licht- und Hitzestabilisatoren, Antioxidantien, optische Aufheller, Pigmente, Farbstoffe, organische oder mineralische Füll- und Verstärkungsstoffe, insbesondere Schnittglas, Glaskugeln und Graphit, Tracer, Duftstoffe.

Bevorzugte weitere verarbeitungsbedingte Additive sind beispielsweise flüssige Weichmacher, insbesondere Carbonsäureester in eigenschaftsrelevanter Konzentration, z.B. 3 bis 13 Gew.Teilen. Flüssige Weichmacher werden vorteilhaft zur erleichterten Zugabe und Verteilung des Flüssigsystems in der Lactamschmelze und insbesondere zur homogenen Auslösung und Durchführung der Lactampolymerisation mit geringerem technischen Aufwand verwendet.

In einer bevorzugten Ausführungsvariante ist als weiterer Verfahrensschritt eine thermische Nachbehandlung des Polyamids, bevorzugt knapp unterhalb dessen Schmelzpunkt und vorteilhaft unter trockenem Schutzgas vorgesehen.
Für PA6 werden dafür Temperaturen von maximal 220°C angewendet.

Nach dem Stand der Technik ist es dadurch möglich, die Endeigenschaften der Polymeren zu verbessern, insbesondere den restlichen Anteil an unumgesetzten Lactam zu reduzieren.
In einer anderen Verfahrensvariante werden Gussformen mit dem aktivierten Laktam-Gemisch gefüllt und die Gussteile langsam auspolymerisiert.

Nach dem Stand der Technik lassen sich so hervorragende mechanische Grundwerte, insbesondere hohe Zähigkeit, Durchschussfestigkeit und Abriebbeständigkeit erreichen.

Eine weitere Variante ist der Einsatz des aktivierten Lactam-Gemischs zur Herstellung von Hohlkörpern, vorzugsweise im sog. Rotomolding-Verfahren. Bevorzugte Endprodukte sind Behälter von hoher Bruchfestigkeit oder beispielsweise mit guten Sperreigenschaften gegen flüssige Medien, insbesondere gegen Treibstoffe.

Das erfindungsgemässe Verfahren wird nachfolgend beispielhaft erläutert. Der Umfang der Erfindung ist dadurch jedoch in keiner Weise eingeschränkt.

### Beispiele 1,2

Die Beispiele 1 und 2 beschreiben die Herstellung von Flüssigsystemen. Zur Herstellung von Flüssigsystemen ist das Arbeiten unter einer trockenen Schutzgas-Atmosphäre angezeigt.
In einem Gefäss mit Innentemperaturmessung wird die Komponente a) vorgelegt und auf 30 bis maximal 70°C erwärmt.
Danach wird unter Rühren die Komponente c) eingetragen und homogen gemischt. Nach Entstehen einer klaren Lösung werden unter Kontrolle der Temperatur, welche 90°C nicht überschreiten darf, die Komponente b) und anschliessend gegebenenfalls die Additive d) zugegeben.

Die resultierenden Lösungen sind bei Raumtemperatur flüssig und lagerstabil. Sie verkrusten oder verschlacken auch an trockener Luft nicht.

**Tabelle 1**

| FLÜSSIGSYSTEME | | | | | | | | | |
|---|---|---|---|---|---|---|---|---|---|
| **No** | **Komponen**t**e a)** | **Teile a)** | **Komponente b)** | **Teile b)** | **Komponente c)** | **Teile c)** | **Komponente d)** | **Teile d)** | **Bemerkung** |
| **1** | DMI | 50 | Na-CL | 25 | CD | 25 | --------- | ----- | orangegelbe, klare Flüssigkeit |
| **2** | DMPU | 50 | Na-CL | 30 | CL-MDI | 20 | ------ | ---- | gelbe,klare Flüssigkeit |
| DMPU: N-,N'-Dimethylpropylenharnstoff | | | | | | | | | |
| DMI: N, N'-Dimethylethylenharnstoff | | | | | | | | | |
| Na-CL: Natrium-Caprolactamat in Caprolactam, ca.5% Natriumgehalt, Pacast AG, Sargans (CH) | | | | | | | | | |
| CL-MDI: Caprolactam verkapptes Methylendiisocyanat. Grilbond IL6 (R), Ems-Chemie AG, Domat/Ems (CH) | | | | | | | | | |
| CD: Substituiertes Diarylcarbodiimid, Stabaxol I (R), Rhein Chemie GmbH, Mannheim (D) | | | | | | | | | |

### Beispiele 3 und 4

Zur Verwendung der Flüssigsysteme zur Auslösung der aktivierten anionischen Lactampolymerisation kann nach folgender allgemeiner Vorschrift verfahren werden.
In einem Gefäss mit Innentemperaturmessung wird unter Stickstoff-Atmosphäre eine Lactam-Schmelze vorgelegt und unter kontrollierter Temperatur und Rühren das Flüssigsystem eingetragen und homogen gelöst.
Unmittelbar nach der Aktivierung wird die Laktamschmelze in eine, unter Stickstoff-Atmosphäre befindliche, auf 170°C vorgeheizte Form gegossen.
Die Vergleichszeit t beschreibt die Zeitspanne bis zum Unrührbarwerden der Schmelze (Topfzeit) innerhalb derer die aktivierte Schmelze in die Form gegossen werden muss.
Anschliessend wird die Schmelze 60 min bei 170°C in der Form auspolymerisiert.

**Tabelle 2**

| Verwendung der Flüssigsysteme der Beispiele 1 und 2 zur Lactampolymerisation im Monomergussverfahren | | | | | | | | |
|---|---|---|---|---|---|---|---|---|
| **No** | **Lactam** | **Teile** | **System gemäss** | **Teile** | **Schmelze Temperatur** | **Vergl. Zeit t** | **DSC- Smp Polymer** | **Bemerkungen** |
| **3** | Laurinlactam | 100 | Beispiel **2** | 4 | 175°C | 200sec | 170°C | keine Lunkerbildung leichte Verfärbung |
| **4** | Laurinlactam | 100 | Beispiel **3** | 4 | 175°C | 20sec | 170°C | keine Lunkerbildung keine Verfärbung |

### Beispiele 5 bis 18

In der gleichen Weise, wie in den Beispielen 1 und 2 werden weitere Flüssigsysteme hergestellt, deren Zusammensetzung in Tabelle 3 aufgeführt ist.

In Tabelle 4 sind Angaben zur Durchführung der aktivierten anionischen Lactampolymerisation unter Verwendung der Flüssigsysteme und die Charakterisierung zusammengefasst.

Das Vorgehen ist das gleiche wie in den Versuchen 4 bis 6. Nach dem Unrührbar-Werden der Schmelze wurde noch 60 Minuten bei der angegebenen Polymerisationstemperatur weiter polymerisiert, dann wurden die Lösungsviskosität und der Schmelzpunkt des Polymeren gemessen.

Der Rest-Extrakt aller Polymeren lag deutlich unter 1 Gew.%.

Der Vergleich der unterschiedlichen Zeiten tᵤ
zeigt, dass die Polymerisationsgeschwindigkeit durch die Zusammensetzung des Flüssigsystems beeinflusst und damit die Polymerisation gesteuert werden kann.

**Tabelle 3**

| **FLÜSSIGSYSTEME** | | | | | | | | |
|---|---|---|---|---|---|---|---|---|
| **No** | **Komponente a)** | **Teile a)** | **Komponente b)** | **Teile b)** | **Komponente c)** | **Teile c)** | **Komponente d) *)** | **Teile d)** |
| 5 | NMP | 50 | Na-CL | 16.6 | CL-MDI | 16.6 | | |
| | CL | 16.8 | | | | | | |
| 6 | NMP | 30 | Na-CL | 30 | Bis-Ox | 10 | Rc-Ox | 30 |
| 7 | NOP | 50 | Na-CL | 25 | CD | 25 | | |
| 8 | DMI | 50 | Na-CL | 25 | CD | 25 | | |
| 9 | DMI | 60 | Na-LL | 20 | CD | 20 | | |
| 10 | DMPU | 50 | Na-CL | 30 | CL-MDI | 20 | | |
| 11 | DMPU | 48 | Na-CL | 19 | CL-MDI | 19 | PA | 14 |
| 12 | DMPU | 30 | Na-CL | 35 | Bis-Ox | 35 | | |
| 13 | TBH | 30 | | | | | | |
| | NMP | 30 | Na-CL | 20 | CD | 20 | | |
| 14 | TEH | 55 | Na-CL | 25 | CL-MDI | 20 | | |
| 15 | TMH | 40 | | | | | | |
| | NMP | 20 | Na-CL | 20 | CL-MDI | 20 | | |
| 16 | TMH | 30 | | | | | | |
| | TBH | 30 | Na-CL | 20 | Bis-Ox | 20 | | |
| 17 | TMH | 20 | | | | | | |
| | TBH | 20 | | | | | | |
| | NMP | 20 | Na-CL | 20 | CD | 20 | | |
| 18 | DMPU | 77 | Na-CL (100%) | 11.7 | DCC | 11.3 | | |

| | | | | | | | | |
|---|---|---|---|---|---|---|---|---|
| )* die Komponente d) umfasst zusätzlich ca 70 Gew % der Komponente b) (= deren Lactam-Anteil) CL: Caprolactam LL: Laurinlactam NMP: N-Methyl-2-pyrrolidon BASF, Ludwigshafen (D) NOP: N-Octyl-2-pyrrolidon BASF, Ludwigshafen (D) PA: Phenolisches Antioxidant, Irganox 1135 (R), Ciba-Geigy AG, Basel (CH) DMPU: N,N'-Dimethylpropylenharnstoff, BASF, Ludwigshafen (D) DMI N,N'-Dimethylethylenharnstoff, Siebner Hegner Rohstoffe, Zürich (CH) TBH: Tetrabutylharnstoff BASF, Ludwigshafen (D) TEH: Tetraethylharnstoff Fluka AG, Buchs (CH) TMH: Tetramethylharnstoff Fluka AG, Buchs (CH) Na-CL: Natrium-Caprolactamat in Caprolactam, ca.30 Gew.% Natriumlactamat-Anteil, Pacast AG, Sargans (CH) Na-LL Natrium -Laurinlactamat in Laurinlactam; ca 30 Gew.% Laurinlactamat-Anteil CD: Bis-(2,6-diisopropylphenyl)carbodiimid, Stabilisator 7000 (R), Raschig AG, Ludwigshafen (D) CL-MDI: Caprolactam-verkapptes Methylendiisocyanat, Grilbond IL6 (R), Ems-Chemie AG, Domat/Ems (CH) Bis-Ox: Ricinyl-bisoxazolin, Loxamid 8523 (R), Henkel KG, Düsseldorf (D) Rc-Ox: Ricinyl-oxazolin, Loxamid 8513 (R), Henkel KG, Düsseldorf (D) DCC: Dicyclohexylcarbodiimid, Toyo Kasei Kogyo, Osaka, (J) | | | | | | | | |

**Tabelle 4**

| Verwendung der Flüssigsysteme der Beispiele 5 bis 18 zur Lactampolymerisaion | | | | | | |
|---|---|---|---|---|---|---|
| **Flüssigsystem** | **Teile** | **Lactam** | **T** °C | **t**ᵤ sec | **Smp** °C | **relative Viskosität** |
| **5** | 6 | CL | 140 | 70 | 211 | |
| **6** | 3 | LL | 175 | 10 | 170 | |
| **7** | 3 | LL | 175 | 120 | 172 | |
| **8** | 3 | LL | 175 | 80 | 175 | |
| **9** | 3 | LL | 175 | 60 | 172 | |
| **10** | 3 | LL | 175 | 22 | 172 | |
| **11** | 3 | LL | 175 | 90 | 170 | |
| **12** | 3 | LL | 175 | 10 | 171 | |
| **13** | 3 | LL | 200 | 200 | 173 | 3.05 |
| **14** | 3 | LL | 200 | 10 | 169 | nmb |
| **15** | 3 | LL | 200 | 8 | 166 | nmb |
| **16** | 3 | LL | 200 | 14 | 166 | 6.0 |
| **17** | 3 | LL | 200 | 200 | 172 | 2.9 |
| **18** | 3 | LL | 200 | 200 | 175 | 2.9 |
| T: Polymerisationstemperatur nmb: rel. Lösungsviskosität sehr hoch, tᵤ: Zeit bis zum Unrührbarwerden der Schmelze nach üblicher Methode nicht messbar Smp °C: DSC-Schmelzpunkt des Polymeren Relative Lösungsviskosität des Polymeren: 0,5%-ig in m-Kresol | | | | | | |

### Beispiel 19

Mit dem Flüssigsystem 18 wurde für einen Umsatz des Lactams von über 99 Gew.% die Abhängigkeit der Zeit tᵤ von der Polymerisationstemperatur T erfasst.

**Tabelle 5**

| | | | | | | |
|---|---|---|---|---|---|---|
| Polymerisationstemperatur T [°C] | 170 | 190 | 210 | 230 | 250 | 270 |
| Gesamtpolym. Zeit [sec] | 3500 | 1500 | 900 | 500 | 270 | 170 |

In weiteren Versuchen wurden Mineralien, Farbpigmente, Entformungsmittel und Stabilisatoren in Lactam 12 -Schmelze eingetragen und diese unter Zusatz von 3 Gew.% des Flüssigsystems aus Beispiel 13 polymerisiert.

So wurden als gut vorgetrocknete, feingemahlene organische Stoffe Mg(OH)2 , Ca(OH)2, Kaolin, Mikrotalk und CaCO3 eingesetzt und 20 Minuten bei 220°C polymerisiert.
Dabei resultierten Polymerisate mit relativen Lösungsviskositäten zwischen 2.0 und 2.5.

Bei Verwendung von Antioxydantien wie z.B. Irganox 245, Irgafos 168, Tinuvin 770 von Ciba-Geigy zeigte sich, dass die Konzentration von 0,5 Gew% nicht überschritten werde sollte, sofern diese Additive aktive H-Atome aufweisen, die sterisch nicht hinreichend abgeschirmt sind.
Für Entschäumer und Formtrennmittel werden vorteilhaft Mengenanteile von deutlich weniger als 1 Gew.% eingesetzt.
So genügt schon 0.05 Gew.% des Entformungsmittel Brüggolen P-12 der Fa. Brüggemann, Heilbronn ( D ) für eine einwandfreie Entformung der Formteile.

## Patentansprüche

1. Verfahren zur aktivierten anionischen Laktampolymerisation, in dem in einer wasserfreien Laktamschmelze die Polymerisation ausgelöst, nachfolgend die Schmelze bei einer Verfahrenstemperatur bis 320°C zumindest teilweise polymerisiert und gegebenenfalls nach Zugabe von Additiven der Formgebung zugeführt wird und dabei die Polymerisation weitergeführt und/oder eine thermische Nachbehandlung durchgeführt wird, wobei eine kontinuierliche Verfahrensweise ausgenommen ist,
dadurch gekennzeichnet,
dass die Polymerisation durch Zugabe eines lagerstabilen und bei Raumtemperatur flüssigen systems, welches Aktivator und Katalysator enthält, ausgelöst wird, wobei das Flüssigsystem erhältlich ist durch Umsetzung von
a) 20 bis 80 Gew.Teilen
a1) mindestens einer N-disubstituierten Carbonsäureamid-Verbindung und/oder
a2) mindestens einer N,N'-disubstituierten Harnstoff-Verbindung,
welche beide auch einen durch ihre Substituenten gebildeten heterocyclischen Ring enthalten können,
b) 5 bis 30 Gew.Teilen mindestens eines Alkali- oder Erdalkali-Lactamats,
c) 5 bis 30 Gew.Teilen mindestens eines Aktivators, wobei sich a), b) und c) zu 100 Gew.Teilen ergänzen.

2. Verfahren nach Anspruch 1,
dadurch gekennzeichnet, dass
das Lactam ausgewählt ist aus der Gruppe Caprolactam, Önanthlactam, Laurinlactam und ihren Gemischen.

3. Verfahren nach Anspruch 1 oder 2,
dadurch gekennzeichnet, dass
für die Polymerisation des Lactam 12 die Verfahrenstemperatur 200 bis 320°C beträgt.

4. Verfahren nach einem der vorhergehenden Ansprüche,
dadurch gekennzeichnet, dass
die N-disubstituierten Carbonsäureamid-Verbindungen a1) ausgewählt sind aus der Gruppe
N,N-Dimethylformamid, N,N-Dimethylacetamid, N,N-Dimethylpropionamid, N-Phenyl-N-methylacetamid, N-Naphthyl-N-ethylacetamid, N,N-Diethylisobutyramid, N-Methylformanilid, N-Ethylacetanilid, N-Ethyl-4-nitroacetanilid, N-n-Butylacetanilid, N-Ethyl-o-acetotoluidid,N,N'-p-Phenylen-bis- acetanilid, 2-Chlor-N-ethylacetanilid, N,N'-Diphenylacetanilid, N,N'-Diphenylformamid, N,N'-Diethylformamid, N-Methyl-N-1-naphthylacetamid, N,N-Di-n-butylacetamid, N.N-Diisopropylpropionamid, t-Butyl-N-octyldecanamid, N,N-Dimethylbenzamid, N,N-Diethyl-p-toluamid, N-Alkylpyrrolidone, wie N- Methylpyrrolidon und N-Octyl-2-pyrrolidon, N-Phenylcaprolactam, N-Ethyl-α-pyrrolidon, N-Phenylpiperidon, N-lsopropylcaprolactam, N-Cyclohexyldodecanolactam, N-Acetylpyridin, N-Acetylpiperidin, N,N'-Diacetylpiperazin, n-Propionylmorpholin, N-Acetylmorpholin und wobei die N,N'-disubstituierten Harnstoffverbindungen a2) ausgewählt sind aus der Gruppe N,N-Dimethylethylenharnstoff, N,N'-Dimethylpropylenharnstoff, Tetramethylharnstoff, Tetraethylharnstoff und Tetrabutylharnstoff.

5. Verfahren nach einem der vorhergehenden Ansprüche,
dadurch gekennzeichnet, dass
das Flüssigsystem in Anteilen von 0,5 bis 15 Gew.Teilen zu 100 Gew.Teilen Lactamschmelze zugegeben wird.

6. Verfahren nach einem der vorhergehenden Ansprüche,
dadurch gekennzeichnet, dass
als Additiv thixotropierende Zusätze verwendet werden.

7. Verfahren nach einem der Ansprüche 1 bis 6,
dadurch gekennzeichnet, dass
das Gemisch aus Lactam und Flüssigsystem in Gussformen gefüllt und dort auspolymerisiert wird.

8. Verfahren nach einem der Ansprüche 1 bis 6,
dadurch gekennzeichnet, dass
das Gemisch aus Lactam und Flüssigsystem zur Herstellung von Hohlkörpern nach dem Rotomolding-Verfahren verwendet wird.

9. Verfahren nach einem der vorhergehenden Ansprüche,
dadurch gekennzeichnet, dass
die Nachbehandlung des Polylactams gegebenenfalls unter Schutzgas-Atmosphäre knapp unter dessen Schmelzpunkt durchgeführt wird.

## Claims

1. Process for activated anionic lactam polymerisation, in which the polymerisation is triggered in an anhydrous lactam melt, following which the melt is at least partially polymerised at a process temperature of up to 320°C and, if appropriate after mixing in additives, is sent to the moulding stage and polymerisation is continued and/or a thermal after-treatment is carried out, the process being excluded from being a continuous process,
characterised in that
the polymerisation is triggered by the addition of a system, stable in storage and liquid at room temperature, which contains activator and catalyst, the liquid system being obtainable by reacting
a) 20 to 80 parts by wt.
a1) of at least one N-disubstituted carboxylic acid amide compound and/or
a2) of at least one N,N'-disubstituted urea compound,
both of which may also contain a heterocyclic ring formed by their substituents,
b) 5 to 30 parts by wt. of at least one alkali lactamate or alkaline earth lactamate,
c) 5 to 30 parts by wt. of at least one activator, where a), b) and c) add up to 100 parts by wt.

2. Process according to claim 1,
characterised in that the lactam is selected from the group comprising caprolactam, enantholactam, laurinlactam and mixtures thereof.

3. Process according to claim 1 or 2,
characterised in that the process temperature for polymerising lactam 12 is 200 to 320 °C.

4. Process according to any of the preceding claims,
characterised in that the N-disubstituted carboxylic acid amide compounds a1) are selected from the group comprising:
N,N-dimethyl formamide, N,N-dimethyl acetamide, N,N-dimethyl propionamide, N-phenyl-N-methyl acetamide, N-naphthyl-N-ethyl acetamide, N,N-diethyl isobutyramide, N-methyl formanilide, N-ethyl acetanilide, N-ethyl-4-nitroacetanilide, N-n-butyl acetanilide, N-ethyl-o-acetotoluidide, N,N'-p-phenylene-bis-acetanilide, 2-chloro-N-ethyl acetanilide, N,N'-diphenyl acetanilide, N,N-diphenyl formamide, N,N'-diethyl formamide, N-methyl-N-1-naphthyl acetamide, N,N-di-n-butyl acetamide, N,N-diisopropyl propionamide, t-butyl-N-octyl decanamide, N,N-dimethyl benzamide, N,N-diethyl-p-toluamide, N-alkyl pyrrolidones such as N-methyl pyrrolidone and N-octyl-2-pyrrolidone, N-phenyl caprolactam, N-ethyl-α-pyrrolidone, N-phenyl piperidone, N-isopropyl caprolactam, N-cyclohexyl dodecanolactam, N-acetyl pyridine, N-acetyl piperidine, N,N'-diacetyl piperazine, n-propionyl morpholine, N-acetyl morpholine,
and where the N,N-disubstituted urea compounds a2) are selected from the group comprising N,N-dimethyl ethylene urea, N,N'-dimethyl propylene urea, tetramethyl urea, tetraethyl urea and tetrabutyl urea.

5. Process according to any of the preceding claims,
characterised in that the liquid system is added in portions of 0.5 to 15 parts by wt. per 100 parts by wt. of lactam melt.

6. Process according to any of the preceding claims,
characterised in that thixotropic additives are used as the additive.

7. Process according to any of claims 1 to 6,
characterised in that the mix of lactam and liquid system is filled into casting moulds, where it is fully polymerised.

8. Process according to any of claims 1 to 7,
characterised in that the mix of lactam and liquid system is used to produce blow moulded parts using the rotomoulding method.

9. Process according to any of the preceding claims,
characterised in that the after-treatment of the polylactam, in a protective atmosphere if appropriate, is carried out just below the melting point of the polylactam.

## Revendications

1. Procédé pour la polymérisation anionique activée de lactame, dans laquelle la polymérisation est déclenchée dans une masse fondue de lactame anhydre, la masse fondue est ensuite au moins partiellement polymérisée à une température de processus de jusqu'à 320°C et, éventuellement après addition d'additifs, est envoyée au formage et la polymérisation est alors continuée et/ou un post-traitement thermique est effectué, un mode opératoire en continu étant exclu, caractérisé en ce que la polymérisation est déclenchée par addition d'un système, stable au stockage et liquide à la température ambiante, qui contient activateur et catalyseur, le système liquide pouvant être obtenu par la réaction de
a) 20 à 80 parties en poids
a1) d'au moins un composé de type carboxamide N-disubstitué et/ou
a2) au moins un composé de type urée N,N'-disubstituée,
qui peuvent l'un et l'autre comporter également un cycle hétérocyclique formé par leurs substituants,
b) 5 à 30 parties en poids d'au moins un lactamate alcalin ou alcalino-terreux,
c) 5 à 30 parties en poids d'au moins un activateur, a), b) et c) constituant au total 100 parties en poids.

2. Procédé selon la revendication 1, caractérisé en ce que le lactame est choisi dans l'ensemble constitué par le caprolactame, l'oenantholactame, le laurolactame et des mélanges de ceux-ci.

3. Procédé selon la revendication 1 ou 2, caractérisé en ce que, pour la polymérisation du lactame 12, la température de processus est de 200 à 320°C.

4. Procédé selon l'une des revendications précédentes, caractérisé en ce que les composés de type carboxamide N-disubstitué a1) sont choisis dans l'ensemble constitué par les composés suivants:
N,N-diméthylformamide, N,N-diméthylacétamide, N,N-diméthylpropionamide, N-phényl-N-méthylacétamide, N-naphtyl-N-éthylacétamide, N,N-diéthylisobutyramide, N-méthylformanilide, N-éthylacétamide, N-éthyl-4-nitroacétamide, N-n-butylacétanilide, N-éthyl-o-acétotoluidide, N,N'-p-phénylène-bis-acétanilide, 2-chloro-N-éthylacétanilide, N,N'-diphénylacétanilide, N,N'-diphénylformamide, N,N'-diéthylformamide, N-méthyl-N-1-naphtylacétamide, N,N-di-n-butylacétamide, N,N-diisopropylpropionamide, tert-butyl-N-octyldécanamide, N,N-diméthylbenzamide, N,N-diéthyl-p-toluamide, N-alkylpyrrolidones, telles que N-méthylpyrrolidone et N-octyl-2-pyrrolidone, N-phénylcaprolactame, N-éthyl-α-pyrrolidone, N-phénylpipéridone, N-isopropylcaprolactame, N-cyclohexyldodécanolactame, N-acétylpyridine, N-acétylpipéridine,
N,N'-diacétylpipérazine, n-propionylmorpholine, N-acétylmorpholine,
et les composés de type urée N,N'-disubstituée a2) sont choisis dans l'ensemble constitué par la N,N-diméthyléthylène-urée, la N,N'-diméthylpropylène-urée, la tétraméthylurée, la tétraéthylurée et la tétrabutylurée.

5. Procédé selon l'une des revendications précédentes, caractérisé en ce que le système liquide est ajouté en proportions de 0,5 à 15 parties en poids, pour 100 parties en poids de masse fondue de lactame.

6. Procédé selon l'une des revendications précédentes, caractérisé en ce que l'on utilise comme additif des agents de thixotropie.

7. Procédé selon l'une des revendications 1 à 6, caractérisé en ce que le mélange de lactame et système liquide est introduit dans des moules de coulée et sa polymérisation y est achévée.

8. Procédé selon l'une des revendications 1 à 6, caractérisé en ce que le mélange de lactame et système liquide est utilisé pour la fabrication de corps moulés selon le procédé de rotomoulage.

9. Procédé selon l'une des revendications précédentes, caractérisé en ce que le post-traitement du polylactame est effectué juste au-dessous de son point de fusion, éventuellement sous une atmosphère de gaz protecteur.
